# EUROPEAN PATENT SPECIFICATION

(11) **EP 1 619 211 B1**
(45) Date of publication and mention of the grant of the patent: **17.10.2012**
(21) Application number: 04729496.2
(22) Date of filing: 26.04.2004
(51) Int. Cl.: C08F 4/00

(54) **PROCESS FOR PRODUCTION OF LIVING-RADICAL POLYMERS AND POLYMERS**
VERFAHREN ZUR HERSTELLUNG VON LEBENDEN RADIKALISCHEN POLYMEREN UND POLYMERE
PROCEDE DE PRODUCTION DE POLYMERES ET DE POLYMERES A RADICAUX VIVANTS

(30) Priority: 25.04.2003 JP 2003121223
(43) Date of publication of application: 25.01.2006
(73) Proprietor: OTSUKA CHEMICAL COMPANY, LIMITED, Osaka-shi, Osaka 540-0021 (JP)
(72) Inventor: YAMAGO, Shigeru, Abeno-ku, Osaka-shi, Osaka 545-0053 (JP); YOSHIDA, Junichi, Hirakata-shi, Osaka 573-0076 (JP); KAMESHIMA, T. c/o Otsuka Chemical Co. Ltd., Tokushima-shi, Tokushima 771-0193 (JP)
(74) Representative: Ritthaler, Wolfgang
(86) International application number: PCT/JP2004/005989
(87) International publication number: WO 2004/096870

(56) References cited:
- EP-A1- 1 541 592
- EP-A1- 1 595 894
- WO-A1-2004/014962
- GOTO A. ET AL: 'Mechanism-based invention of high-speed living radical polymerization using organotellurium compounds and azo-initiators' JOURNAL OF THE AMERICAN CHEMICAL SOCIETY vol. 125, no. 29, 23 July 2003, pages 8720 - 8721, XP002979332
- YAMAGO S. ET AL: 'Tailored synthesis of structurally defined polymers by organotellurium-mediated living radical polymerization (TERP)' JOURNAL OF THE AMERICAN CHEMICAL SOCIETY vol. 124, no. 46, 20 November 2002, pages 13666 - 13667, XP002964725

## Description

### TECHNICAL FIELD

The present invention relates to a process for producing living radical polymers.

### BACKGROUND ART

Azo compounds are used as a radical polymerization initiator. Especially, AIBN (2,2'-azobis-isobutyronitrile) is an important compound and is widely used among azo-type radical polymerization initiators. In such reactions, the azo-type initiator is used for polymerization of extremely various vinyl monomers such as styrene, alkyl (meth)acrylate, acrylonitrile or the like.

The above methods make it possible to polymerize various monomers, but are unsuited to precisely control molecular weights and molecular weight distributions of the resulting polymers.

In order to solve the above problem, a process is known in which styrene is polymerized with use of AIBN and diphenyl ditelluride (DPDTe) to obtain polystyrene (see, eg., non-patent literature 1).

- However, the above process discloses only an aromatic DPDTe as a ditelluride compound and only styrene as a vinyl monomer, and produces a polymer having a molecular weight distribution (PD=Mw/Mn) of 1.18 to 1.26. Accordingly, it is known from the above literature that a polymer having precision control of molecular weight distribution (PD=Mw/Mn) can be obtained when styrene is used as a vinyl monomer, but there is no knowledge a polymer when a monomer other than styrene is used. We have investigated a polymerization using a vinyl monomer other than styrene such as a (meth)acrylate ester, and found that a polymer having an excellent molecular weight distribution was not obtained.
[non-patent literature 1 : Polymer Bulletin 43, 143-150 (1999)]

An object of the present invention is to provide a process for producing a living radical polymer by polymerizing a vinyl monomer with use of an organotellurium compound represented by the formula (1), an azo type polymerization initiator and a ditelluride compound represented by the formula (2), the process making possible to prepare living radical polymers having more precise molecular weight and molecular weight distributions (PD=Mw/Mn) under mild conditions, even when not only styrene but a vinyl monomer other than styrene such as a (meth)acrylate ester is used.

### DISCLOSURE OF THE INVENTION

The present invention provides a process for producing a living radical polymer characterized in that a vinyl monomer is polymerized with use of an organotellurium compound represented by the formula (1), an azo type polymerization initiator and a ditelluride compound represented by the formula (2), 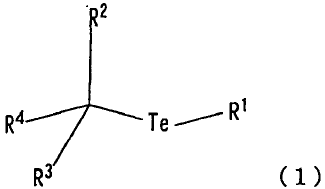 wherein R¹ is C₁-C₈ alkyl, aryl, substituted aryl or an aromatic heterocyclic group, R² and R³ are each a hydrogen atom or C₁-C₈ alkyl, and R⁴ is aryl, substituted aryl, an aromatic heterocyclic group, acyl, oxycarbonyl or cyano.

(R₁Te)₂ (2)

wherein R¹ is the same as above.

The living radical polymer is produced by polymerizing a vinyl monomer in the presence of an organotellurium compound represented by the formula (1) and a compound represented by the formula (2) using an azo type polymerization initiator 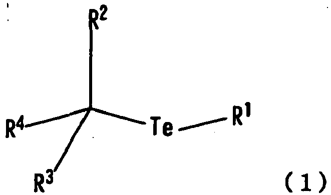 wherein R¹ is C₁-C₈ alkyl, aryl, substituted aryl or an aromatic heterocyclic group, R² and R³ are each a hydrogen atom or C₁-C₈ alkyl, and R⁴ is aryl, substituted aryl, an aromatic heterocyclic group, acyl, oxycarbonyl or cyano

(R¹Te)₂ (2)

wherein R¹ is the same as above.

The organotellurium compounds of the formula (1) to be used in the present invention are as follows 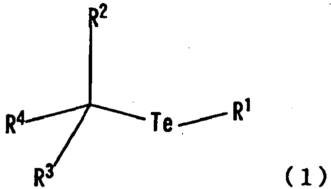 wherein R¹ is C₁-C₈ alkyl, aryl, substituted aryl or an aromatic heterocyclic group, R² and R³ are each a hydrogen atom or C₁-C₈ alkyl, and R⁴ is aryl, substituted aryl, an aromatic heterocyclic group, acyl, oxycarbonyl or cyano.

Examples of groups represented by R¹ are as follows.

Examples of C₁-C₈ alkyl groups usable are straight-chain, branched chain or cyclic alkyl groups having 1 to 8 carbon atoms, such as methyl, ethyl, n-propyl, isopropyl, cyclopropyl, n-butyl, sec-butyl, tert-butyl, cyclobutyl, n-pentyl, n-hexyl, n-heptyl and n-octyl. Preferable alkyl groups are straight-chain or branched chain alkyl groups having 1 to 4 carbon atoms. Methyl, ethyl or n-butyl is more preferable.

Examples of groups usable include aryl groups such as phenyl and naphthyl, substituted aryl groups such as phenyl having a substituent and naphthyl having a substituent, and aromatic heterocyclic groups such as pyridyl, pyrrol, furyl and thienyl. Examples of substituents of aryl groups having a substituent are a halogen atom, hydroxyl, alkoxyl, amino, nitro, cyano, carbonyl-containing groups represented by -COR^{a} (R^{a} = C₁-C₈ alkyl, aryl, C₁-C₈ alkoxyl or aryloxy), sulfonyl, trifluoromethyl. Preferable aryl groups are phenyl and trifluoromethyl-substituted phenyl. Preferably such substituted groups have one or two substituents at the para-position or ortho-position.

Examples of groups represented by R² and R³ are as follows.

Examples of C₁-C₈ alkyl groups usable are the same as the alkyl groups represented by R¹ and given above.

Examples of groups represented by R⁴ are as follows.

Examples of aryl, substituted aryl, aromatic heterocyclic groups usable are the same as those groups represented by R¹ and given above.

Examples of acyl groups usable are C₁-C₈ acyl groups such as formyl, acetyl, butyryl, benzoyl and toluoyl.

Examples of preferred oxycarbonyl groups are those represented by -COOR^{b} (R^{b} = H, C₁-C₈ alkyl or aryl) such as carboxyl, methoxycarbonyl, ethoxycarbonyl, propoxycarbonyl, n-butoxycarbonyl, sec-butoxycarbonyl, tert-butoxycarbonyl, n-pentoxycarbonyl and phenoxycabonyl. Methoxycarbonyl and ethoxycarbonyl are more desirable oxycarbonyl groups.

Examples of preferred groups represented by R⁴ are aryl, substituted aryl, oxycarbonyl and cyano. The aryl group is preferably phenyl. Examples of preferred substituted aryl groups are phenyl substituted with a halogen atom and phenyl substituted with trifluoromethyl. When the substituent is a halogen, the phenyl is substituted with preferably one to five halogen atoms. In the case of alkoxyl or trifluoromethyl, preferably one or two substituents are present. When having one substituent, the group is substituted preferably at the para- or ortho-position. When the group has two substituents, the meta-positions are preferred. Examples of preferred oxycarbonyl groups are methoxycarbonyl and ethoxycarbonyl.

Examples of preferred organotellurium compounds represented by the formula (1) are compounds wherein R¹ is C₁-C₄ alkyl, R² and R³ are each a hydrogen atom or C₁-C₄ alkyl, and R⁴ is aryl, substituted aryl or oxycarbonyl. More preferable organotellurium compounds are those wherein R¹ is C₁-C₄ alkyl, R² and R³ are each a hydrogen atom or C₁-C₄ alkyl, and R⁴ is phenyl, substituted phenyl, methoxycarbonyl or ethoxycarbonyl.

Examples of organotellurium compounds represented by the formula (1) are as follows.

Such organotellurium compounds are (methyltellanyl-methyl)benzene, (1-methyltellanyl-ethyl)benzene, (2-methyltellanyl-propyl)benzene, 1-chloro-4-(methyltellanyl-methyl)benzene, 1-hydroxy-4-(methyltellanyl-methyl)benzene, 1-methoxy-4-(methyltellanyl-methyl)benzene, 1-amino-4-(methyltellanyl-methyl)benzene, 1-nitro-4-(methyltellanyl-methyl)benzene, 1-cyano-4-(methyltellanyl-methyl)benzene, 1-methylcarbonyl-4-(methyltellanyl-methyl)benzene, 1-phenylcarbonyl-4-(methyltellanyl-methyl)benzene, 1-methoxycarbonyl-4-(methyltellanyl-methyl)benzene, 1-phenoxycarbonyl-4-(methyltellanyl-methyl)benzene, 1-sulfonyl-4-(methyltellanyl-methyl)benzene, 1-trifluoromethyl-4-(methyltellanyl-methyl)benzene, 1-chloro-4-(1-methyltellanyl-ethyl)benzene, 1-hydroxy-4-(1-methyltellanyl-ethyl)benzene, 1-methoxy-4-(1-methyltellanyl-ethyl)benzene, 1-amino-4-(1-methyltellanyl-ethyl)benzene, 1-nitro-4-(1-methyltellanyl-ethyl)benzene, 1-cyano-4-(1-methyltellanyl-ethyl)benzene, 1-methylcarbonyl-4-(1-methyltellanyl-ethyl)benzene, 1-phenylcarbonyl-4-(1-methyltellanyl-ethyl)benzene, 1-methoxycarbonyl-4-(1-methyltellanyl-ethyl)benzene, 1-phenoxycarbonyl-4-(1-methyltellanyl-ethyl)benzene, 1-sulfonyl-4-(1-methyltellanyl-ethyl)benzene, 1-trifluoromethyl-4-(1-methyltellanyl-ethyl)benzene, 1-(1-methyltellanyl-ethyl)-3,5-bis-trifluoromethylbenzene, 1,2,3,4,5-pentafluoro-6-(1-methyltellanyl-ethyl)benzene, 1-chloro-4-(2-methyltellanyl-ethyl)benzene, 1-hydroxy-4-(2-methyltellanyl-propyl)benzene, 1-methoxy-4-(2-methyltellanyl-propyl)benzene, 1-amino-4-(2-methyltellanyl-propyl)benzene, 1-nitro-4-(2-methyltellanyl-propyl)benzene, 1-cyano-4-(2-methyltellanyl-propyl)benzene, 1-methylcarbonyl-4-(2-methyltellanyl-propyl)benzene, 1-phenylcarbonyl-4-(2-methyltellanyl-propyl)benzene, 1-methoxycarbonyl-4-(2-methyltellanyl-propyl)benzene, 1-phenoxycarbonyl-4-(2-methyltellanyl-propyl)benzene, 1-sulfonyl-4-(2-methyltellanyl-propyl)benzene, 1-trifluoromethyl-4-(2-methyltellanyl-propyl)benzene, 2-(methyltellanyl-methyl)pyridine, 2-(1-methyltellanyl-ethyl)pyridine, 2-(2-methyltellanyl-propyl)pyridine, 2-methyl-2-methyltellanyl-propanal, 3-methyl-3-methyltellanyl-2-butanone, methyl 2-methyltellanyl-ethanate, methyl 2-methyltellanyl-propionate, methyl 2-methyltellanyl-2-methylpropionate, ethyl 2-methyltellanyl-ethanate, ethyl 2-methyltellanyl-propionate, ethyl 2-methyltellanyl-2-methylpropionate [ethyl-2-methyl-2-methyltellanyl-propionate], ethyl 2-(n-butyltellanyl)-2-methylpropionate [ethyl-2-methyl-2-n-butyltellanyl-propionate], 2-methyltellanylacetonitrile, 2-methyltellanyl-propionitrile, 2-methyl-2-methyltellanyl-propionitrile, (phenyltellanyl-methyl)benzene, (1-phenyltellanyl-ethyl)benzene, (2-phenyltellanyl-propyl)benzene. The above compounds also include all compounds having ethyltellanyl, 1-ethyllellanyl, 2-ethyltellanyl, butyltellanyl, 1-butyltellanyl or 2-butyltellanyl, as changed from the portion of methyltellanyl, 1-methyltellanyl or 2-methyltellanyl.

Preferable are (methyltellanyl-methyl)benzene, (1-methyltellanyl-ethyl)benzene, (2-methyltellanyl-propyl)benzene, 1-chloro-4-(1-methyltellanyl-ethyl)benzene, 1-trifluoromethyl-4-(1-methyltellanyl-ethyl)benzene, methyl 2-methyltellanyl-2-methylpropionate, ethyl 2-methyltellanyl-2-methylpropionate [ethyl-2-methyl-2-methyltellanyl-propionate], ethyl 2-(n-butyltellanyl)-2-methylpropionate [ethyl-2-methyl-2-n-butyltellanyl-propionate], 1-(1-methyltellanyl-ethyl)-3,5-bis-trifluoromethylbenzene, 1,2,3,4,5-pentafluoro-6-(1-methyltellanyl-ethyl)benzene, 2-methyltellanyl-propionitrile, 2-methyl-2-methyltellanylpropionitrile, (ethyltellanyl-methyl)benzene, (1-ethyltellanyl-ethyl)benzene, (2-ethyltellanyl-propyl)benzene, methyl 2-ethyltellanyl-2-methylpropionate, ethyl 2-ethyltellanyl-2-methylpropionate, 2-ethyltellanyl-propionitrile, 2-methyl-2-ethyltellanylpropionitrile, (n-butyltellanyl-methyl)benzene, (1-n-butyltellanyl-ethyl)benzene, (2-n-butyltellanyl-propyl)benzene, methyl 2-n-butyltellanyl-2-methylpropionate, ethyl 2-n-butyltellanyl-2-methylpropionate, 2-n-butyltellanyl-propionitrile, 2-methyl-2-n-butyltellanyl-propionitrile.

The organotellurium compound represented by the formula (1) can be prepared by reacting a compound of the formula (3), a compound of the formula (4) and metallic tellurium.

Examples of compounds represented by the formula (3) are as follows 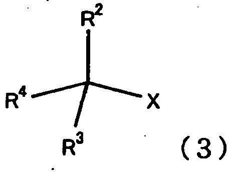 wherein R², R³ and R⁴ are as defined above, and X is a halogen atom.

Examples of groups represented by R², R³ and R⁴ are as given above.

Examples of groups represented by X can be a halogen atom such as fluorine, chlorine, bromine or iodine. Chlorine and bromine are preferable.

Examples of compounds usable are benzyl chloride, benzyl bromide, 1-chloro-1-phenylethane, 1-bromo-1-phenylethane, 2-chloro-2-phenylpropane, 2-bromo-2-phenylpropane, p-chlorobenzyl chloride, p-hydroxybenzyl chloride, p-methoxybenzyl chloride, p-aminobenzyl chloride, p-nitrobenzyl chloride, p-cyanobenzyl chloride, p-methylcarbonylbenzyl chloride, phenylcarbonylbenzyl chloride, p-methoxycarbonylbenzyl chloride, p-phenoxycarbonylbenzyl chloride, p-sulfonylbenzyl chloride, p-trifluoromethylbenzyl chloride, 1-chloro-1-(p-chlorophenyl)ethane, 1-bromo-1-(p-chlorophenyl)ethane, 1-chloro-1-(p-hydroxyphenyl)ethane, 1-bromo-1-(p-hydroxyphenyl)-ethane, 1-chloro-1-(p-methoxyphenyl)ethane, 1-bromo-1-(p-methoxyphenyl)ethane, 1-chloro-1-(p-aminophenyl)ethane, 1-bromo-1-(p-aminophenyl)ethane, 1-chloro-1-(p-nitrophenyl)ethane, 1-bromo-1-(p-nitrophenyl)ethane, 1-chloro-1-(p-cyanophenyl)ethane, 1-bromo-1-(p-cyanophenyl)ethane, 1-chloro-1-(p-methylcarbonylphenyl)ethane, 1-bromo-1-(p-methylcarbonylphenyl)ethane, 1-chloro-1-(p-phenylcarbonylphenyl)ethane, 1-bromo-1-(p-phenylcarbonylphenyl)-ethane, 1-chloro-1-(p-methoxycarbonylphenyl)ethane, 1-bromo-1-(p-methoxycarbonylphenyl)ethane, 1-chloro-1-(p-phenoxycarbonylphenyl)-ethane, 1-bromo-1-(p-phenoxycarbonylphenyl)ethane, 1-chloro-1-(p-sulfonylphenyl)ethane, 1-bromo-1-(p-sulfonylphenyl)ethane, 1-chloro-1-(p-trifluoromethylphenyl)ethane, 1-bromo-1-(p-trifluoromethylphenyl)ethane, 2-chloro-2-(p-chlorophenyl)propane, 2-bromo-2-(p-chlorophenyl)propane, 2-chloro-2-(p-hydroxyphenyl)-propane, 2-bromo-2-(p-hydroxyphenyl)propane, 2-chloro-2-(p-methoxyphenyl)propane, 2-bromo-2-(p-methoxyphenyl)propane, 2-chloro-2-(p-aminophenyl)propane, 2-bromo-2-(p-aminophenyl)propane, 2-chloro-2-(p-nitrophenyl)propane, 2-bromo-2-(p-nitrophenyl)-propane, 2-chloro-2-(p-cyanophenyl)propane, 2-bromo-2-(p-cyanophenyl)propane, 2-chloro-2-(p-methylcarbonylphenyl)propane, 2-bromo-2-(p-methylcarbonylphenyl)propane, 2-chloro-2-(p-phenylcarbonylphenyl)propane, 2-bromo-2-(p-phenylcarbonylphenyl)-propane, 2-chloro-2-(p-methoxycarbonylphenyl)propane, 2-bromo-2-(p-methoxycarbonylphenyl)propane, 2-chloro-1-(p-phenoxycarbonylphenyl)propane, 2-bromo-2-(p-phenoxycarbonylphenyl)propane, 2-chloro-2-(p-sulfonylphenyl)propane, 2-bromo-2-(p-sulfonylphenyl)propane, 2-chloro-2-(p-trifluoromethylphenyl)propane, 2-bromo-2-(p-trifluoromethylphenyl)propane, 2-(chloromethyl)pyridine, 2-(bromomethyl)pyridine, 2-(1-chloroethyl)pyridine, 2-(1-bromoethyl)pyridine, 2-(2-chloropropyl)pyridine, 2-(2-bromopropyl)pyridine, methyl 2-chloroethanoate, methyl 2-bromoethanoate, methyl 2-chloropropionate, methyl 2-bromoethanoate, methyl 2-chloro-2-methylpropionate, methyl 2-bromo-2-methylpropionate, ethyl 2-chloroethanoate, ethyl 2-bromoethanoate, ethyl 2-chloropropionate, ethyl 2-bromoethanoate, ethyl 2-chloro-2-ethylpropionate, ethyl 2-bromo-2-ethylpropionate, 2-chloroacetonitrile, 2-bromoacetonitrile, 2-chloropropionitrile, 2-bromopropionitrile, 2-chloro-2-methylpropionitrile, 2-bromo-2-methylpropionitrile, (1-bromoethyl)benzene, ethyl-2-bromo-iso-butylate, 1-(1-bromoethyl)-4-chlorobenzene, 1-(1-bromoethyl)-4-trifluoromethylbenzene, 1-(1-bromoethyl)-3,5-bis-trifluoromethylbenzene, 1,2,3,4,5-pentafluoro-6-(1-bromoethyl)benzene, 1-(1-bromoethyl)-4-methoxybenzene, ethyl-2-bromo-isobutylate.

Examples of compounds represented by the formula (4) are as follows.

M(R¹)m (4)

wherein R¹ is as defined above, M is an alkali metal, alkaline earth metal or copper atom, and m is 1 when M is an alkali metal, m is 2 when M is an alkaline earth metal, or m is 1 or 2 when M is a copper atom.

Examples of groups represented by R¹ are as given above.

Examples of metals represented by M are lithium, sodium, potassium, magnesium, calcium and copper. Lithium is desirable.

In case that M is magnesium, the compound (4) may either be Mg(R¹)₂ or a compound represented by MgX (X is a halogen atom) which is a Grignard reagent. Chlorine and bromine are preferable.

Examples of compounds usable are methyllithium, ethyllithium, n-butyllithium, phenyllithium, p-chlorophenyl-lithium, p-methoxyphenyllithium, p-nitrophenyllithium. Methyllithium, ethyllithium, n-butyllithium and phenyllithium are preferable.

Next, a detailed description will be given of the process for preparing the compound.

Metallic tellurium is suspended in a solvent. Examples of solvents usable are N,N-dimethylformamide (DMF), tetrahydrofuran (THF), toluene, xylene, hexane, dialkyl ethers. THF is preferable. The amount of solvent to be used, which is suitably adjusted, is 1 to 100 ml, preferably 5 to 20 ml, per gram of metallic tellurium.

A compound (4) is slowly added dropwise to the suspension, followed by stirring. The reaction time differs with the reaction temperature and pressure and is usually 5 minutes to 24 hours, preferably 10 minutes to 2 hours. The reaction temperature is -20°C to 80°C, preferably -10°C to 40°C, more preferably -5°C to 40°C. The reaction is conducted usually under atmospheric pressure, but may be conducted at increased pressure or in a vacuum.

Next, a compound (3) is added to the reaction mixture, followed by stirring. The reaction time differs with the reaction temperature and pressure and is usually 5 minutes to 24 hours, preferably 10 minutes to 2 hours. The reaction temperature is -20°C to 80°C, preferably -10°C to 40°C, more preferably -5°C to 40°C. The reaction is conducted usually under atmospheric pressure, but may be conducted at increased pressure or in a vacuum.

The proportions of the compound (3) and compound (4) to metallic tellurium are 0.5 to 1.5 moles of the compound (3) and 0.5 to 1.5 moles of the compound (4), preferably 0.8 to 1.2 moles of the compound (3) and 0.8 to 1.2 moles of the compound (4), per mole of metallic tellurium.

After the completion of the reaction, the solvent is concentrated, and the desired compound is isolated and purified. Although the method of purification can be determined suitably depending on the compound, usually vacuum distillation or recrystallization is preferable.

An azo type polymerization initiator used in the present invention are not particularly limited insofar as it is usable in a usual radical polymerization. Example thereof are 2,2'-azobis-isobutyronitrile (AIBN), 2,2'-azobis(2-methylbutyronitrile) (AMBN), 2,2'-azobis(2,4-dimethylvaleronitrile) (ADVN), 1,1'-azobis(1-cyclohexanecarbonitrile) (ACHN), dimethyl-2,2'-azobisisobutyrate (MAIB), 4,4'-azobis(4-cyanovaleric acid) (ACVA), 1,1'-azobis(1-acetoxy-1-phenylethane), 2,2'-azobis(2-methylbutylamide), 1,1'-azobis(methyl 1-cyclohexanecarbonate), 2,2'-azobis(4-methoxy-2,4-dimethylvaleronitrile), 2,2'-azobis(2,4,4-trimethylpentane) and 2-cyano-2-propylazoformamide.

Examples of compounds represented by the formula (2) and useful for the present invention are as follows

(R¹Te)₂ (2)

wherein R¹ is the same as above.

The groups R¹ is the same as shown above.

Examples of preferred compounds represented by the formula (2) are those wherein R¹ is C₁-C₄alkyl or phenyl.

More specific examples of compounds represented by the formula (2) are dimethyl ditelluride, diethyl ditelluride, di-n-propyl ditelluride, diisopropyl ditelluride, dicyclopropyl ditelluride, di-n-butyl ditelluride, di-sec-butyl ditelluride, di-tert-butyl ditelluride, dicyclobutyl ditelluride, diphenyl ditelluride, bis(p-methoxyphenyl) ditelluride, bis(p-aminophenyl) ditelluride, bis(p-nitrophenyl) ditelluride, bis(p-cyanophenyl) ditelluride, bis(p-sulfonylphenyl) ditelluride, dinaphthyl ditelluride, dipyridyl ditelluride. Preferable among these are dimethyl ditelluride, diethyl ditelluride, di-n-propyl ditelluride, di-n-butyl ditelluride and diphenyl ditelluride. More preferable are dimethyl ditelluride, diethyl ditelluride, di-n-propyl ditelluride and di-n-butyl ditelluride.

Such compounds are prepared, for example, by reacting metallic tellurium with a compound represented by the formula (4).

Metallic tellurium is suspended in a solvent. Examples of solvents usable are dimethylformamide (DMF), tetrahydrofuran (THF) toluene, xylene, hexane dialkyl ethers. THF is preferable among these. The organic solvent is used usually in an amount of 1 to 100 ml, preferably 5 to 20 ml, per gram of metallic tellurium although the amount is suitably adjustable.

The compound represented by the formula (4) is slowly added dropwise to the suspension, followed by stirring. The reaction time is usually 5 minutes to 24 hours, preferably 10 minutes to 2 hours, although varying with the reaction temperature and pressure. The reaction temperature is -20° C to 80° C, preferably -10° C to 40° C, more preferably -5° C to 40° C. The reaction is conducted usually at atmospheric pressure, but an increased or reduced pressure is usable.

Subsequently, water (which may be neutral water such as saline solution, alkali water such as aqueous solution of ammonium chloride, or acid water such as aqueous solution of hydrochloric acid) is added to the reaction mixture, followed by stirring. Although varying with the reaction temperature or pressure, the reaction time is usually 5 minutes to 24 hours, preferably 10 minutes to 2 hours. The reaction temperature is -20° C to 80° C, preferably 0° C to 40° C, more preferably 15° C to 40° C. The reaction is conducted usually at atmospheric pressure, but an increased or reduced pressure is usable.

Metallic tellurium and the compound of the formula (4) are used in such a ratio that 0.5 to 1.5 moles, preferably 0.8 to 1.2 moles, of the compound of the formula (4) is used per mole of metallic tellurium.

After the completion of the reaction, the solvent is concentrated, and the desired product is isolated from the concentrate and purified. Although the compound can be purified by a suitably selected method, vacuum distillation or reprecipitation purification is usually desirable.

The vinyl monomer to be used in the present invention is not particularly limited insofar as the monomer can be subjected to radical polymerization. Examples of vinyl monomers usable are methyl (meth)acrylate, ethyl (meth)acrylate, propyl (meth)acrylate, butyl (meth)acrylate, octyl (meth)acrylate, lauryl (meth)acrylate, (meth)acrylic acid 2-hydroxyethyl ester, cyclohexyl (meth)acrylate, methylcyclohexyl (meth)acrylate, isobornyl (meth)acrylate, cyclododecyl (meth)acrylate, (meth)acrylic acid, maleic acid, fumaric acid, itaconic acid, citraconic acid, crontonic acid, maleic anhydride, N,N-dimethylaminopropyl(meth)acrylamide, N,N-dimethylaminoethyl(meth)acrylamide, 2-(dimethylamino)ethyl (meth)acrylate, N,N-dimethylaminopropyl (meth)acrylate, N-2-hydroxy-3-acryloyloxypropyl-N,N,N-trimethylammonium chloride, N-methacryloylaminoethyl-N,N,N-dimethylbenzylammonium chloride, glycidyl (meth)acrylate, styrene, α-methylstyrene, 4-methylstyrene (p-methylstyrene), 2-methylstyrene (o-methylstyrene), 3-methylstyrene (m-methylstyrene), 4-methoxystyrene (p-methoxystyrene), p-t-butylstyrene, p-n-butylstyrene, p-tert-butoxystyrene, 2-hydroxymethylstyrene, 2-chlorostyrene (o-chlorostyrene), 4-chlorostyrene (p-chlorostyrene), 2,4-dichlorostyrene, 1-vinylnaphthalene, divinylbenzene, p-styrenesulfonic acid or an alkali metal salt thereof (sodium salt or potassium salt, 2-vinylthiophene, N-methyl-2-vinylpyrrole, 1-vinyl-2-pyrrolidone, 2-vinylpyridine, 4-vinylpyridine N-vinylformaldehyde, N-vinylacetamide (meth)acrylamide, N-methyl(meth)acrylamide, N-isopropyl-(meth)acrylamide, N,N-dimethyl(meth)acrylamide, 1-hexane, 1-octene, 1-decene and like α-olefins, butadiene, isoprene, 4-methyl-1,4-hexadiene, 7-methyl-1,6-octadiene, vinyl acetate, vinyl benzoate, hydroxyethyl (meth)acrylate, (meth)acrylonitrile, methyl vinyl ketone, vinyl chloride, vinylidene chloride,

Preferable among these are (meth)acrylic acid ester, unsaturated monomers containing a cycloalkyl group, aromatic unsaturated monomers (styrene type monomers), (meth)acrylamide type monomers, (meth)acrylonitrile and methyl vinyl ketone.

Examples of preferable (meth)acrylic acid ester monomers are methyl (meth)acrylate, ethyl (meth)acrylate, propyl (meth)acrylate, butyl (meth)acrylate and (meth)acrylic acid 2-hydroxyethyl ester [2-hydroxyethyl (meth)acrylate]. Especially preferable are methyl methacrylate, ethyl methacrylate, propyl methacrylate, butyl methacrylate and methacrylic acid 2-hydroxyethyl ester [2-hydroxyethyl methacrylate].

Examples of preferable unsaturated monomers containing a cycloalkyl group are cyclohexyl (meth)acrylate and isobornyl (meth)acrylate. Especially preferable are cyclohexyl methacrylate and isobornyl methacrylate.

Examples of preferable styrene type monomers are styrene, α-methylstyrene, o-methylstyrene, p-methylstyrene, p-methoxystyrene, p-t-butylstyrene, p-n-butylstyrene, p-tert-butylstyrene, p-chlorostyrene, and p-styrenesulfonic acid or an alkali metal salt thereof (sodium salt or potassium salt. More preferable are styrene and p-chlorostyrene.

Example of preferable (meth)acrylamide type monomers is N-isopropyl-(meth)acrylamide. Especially preferable is N-isopropyl-methacrylamide.

The term "(meth)acrylic acid" refers collectively to "acrylic acid" and "methacrylic acid."

Specifically stated, the living radical polymer of the present invention is produced by the process to be described below.

A vinyl monomer, an organotellurium compound represented by the formula (1), an azo type polymerization initiator and a compound represented by the formula (2) are mixed together in a container having its inside air replaced by an inert gas. Next, the mixture is then stirred. The reaction temperature and the reaction time may be adjusted suitably. The mixture is stirred usually at 20 to 150°C for 1 minute to 100 hours, preferably at 40 to 100°C for 0.1 to 30 hours. The reaction is conducted usually under atmospheric pressure, but may be conducted at increased pressure or in a vacuum. Examples of inert gases usable at this time are nitrogen, argon, helium, among which argon and nitrogen are preferred. Nitrogen is especially preferred.

Although the vinyl monomer and the organotellurium compound represented by the formula (1) are used in amounts which are suitably adjusted depending on the molecular weight and molecular weight distribution of the living radical polymer to be obtained, usually 5 to 10,000 moles, preferably 50 to 5,000 moles, of the vinyl monomer is used per mole of the organotellurium compound represented by the formula (1).

The organotellurium compound represented by the formula (1) and the azo type polymerization initiator are used in the ratio of usually 0.01 to 100 moles, preferably 0.1 to 10 moles, especially preferably 0.1 to 5 moles, of the azo type polymerization initiator per mole of the organotellurium compound of the formula (1).

The organotellurium compound represented by the formula (1) and the a compound represented by the formula (2) are used in the ratio of usually 0.1 to 100 moles, preferably 0.1 to 10 moles, especially preferably 0.1 to 5 moles, of the a compound represented by the formula (2) per mole of the organotellurium compound of the formula (1).

The polymerization reaction is conducted usually in the absence of solvent, while an organic solvent generally in use for radical polymerization or an aqueous solvent may be used. Examples of organic solvents usable are benzene, toluene, N,N-dimethylformamide (DMF), dimethyl sulfoxide (DMSO), acetone, chloroform, carbon tetrachloride, tetrahydrofuran (THF), ethyl acetate, trifluoromethylbenzene. Examples of aqueous solvents are water, methanol, ethanol, isopropanol, n-butanol, ethyl cellosolve, butyl cellosolve, 1-methoxy-2-propanol. The amount of the solvent to be used is adjusted suitably. For example, 0.01 to 50 ml, preferably 0.05 to 10 ml, more preferably 0.1 to 1 ml, of the solvent is used per gram of the vinyl monomer.

Next, the mixture is then stirred. The reaction temperature and the reaction time may be adjusted suitably in accordance with the molecular weight or molecular weight distribution of the living radical polymer to be obtained. The mixture is stirred usually at 20 to 150°C for 1 minute to 100 hours, preferably at 40 to 100°C for 0.1 to 30 hours. The mixture is stirred more preferably at 40 to 80°C for 0.1 to 15 hours. Thus, the present invention has a feature that a high yield and precise PD are performed even at such a low polymerization temperature and short period of polymerization time. The reaction is conducted usually under atmospheric pressure, but may be conducted at increased pressure or in a vacuum.

After the completion of the reaction, the solvent used and the remaining monomer are removed in a vacuum to take out the desired polymer, or the desired product is isolated by re-precipitation using a solvent wherein the product is insoluble. The reaction mixture can be treated by any method insofar as it causes no problem to the desired product.

Different kinds of vinyl monomers are usable in the process of the invention for preparing a living radical polymer. For example when at least two kinds of vinyl monomers are reacted at the same time, a random copolymer can be obtained. The random copolymer obtained is a polymer which comprises the reacted monomers in the original ratio (mole ratio) regardless of the kinds of the monomers. When a random copolymer is obtained by reacting a vinyl monomer A and a vinyl monomer B at the same time, the copolymer has substantially the same material ratio (mole ratio). Further when two kinds of vinyl monomers are reacted in succession, a block copolymer can be obtained. The block copolymer is provided by the same order of reacted monomers regardless of the kinds of the monomers. If a vinyl monomer A and a vinyl monomer B are reacted in succession to obtain a block copolymer, the polymer obtained is in the order of A-B or B-A in conformity with the order of monomers reacted.

The living radical polymerization initiator of the present invention is adapted for excellent control of molecular weights and molecular weight distributions under very mild conditions. In particular, the present polymerization reaction proceeds in a shortened reaction time than the conventional living radical polymerization reaction.

The living radical polymer to be obtained by the invention is adjustable in molecular weight according to the reaction time and the amount of the organotellurium compound, and can be 500 to 1,000,000 in number average molecular weight. The invention is especially suitable for producing living radical polymers having a number average molecular weight of 1,000 to 50,000.

The living radical polymer to be obtained by the invention is controlled to 1.05 to 1.50 in molecular weight distribution (PD = Mw/Mn). The molecular weight distribution is controllable to a narrower range of 1.05 to 1.30, a further narrower range of 1.10 to 1.20, a still narrower range of 1.09 to 1.20, 1.09 to 1.17, 1.09 to 1.12.

It has been found that the living radical polymer of the present invention has a terminal group which is an alkyl, aryl, substituted aryl, aromatic heterocyclic group, acyl, oxycarbonyl or cyano derived from the organotellurium compound and a growth terminal which is highly reactive tellurium. Accordingly, the organotellurium compound used for radical polymerization makes it easier to convert the terminal group to other functional group than in the case of the living radical polymer obtained by conventional living radical polymerization. The living radical polymer obtained according to the invention is therefore usable as a macro living radical polymerization initiator (macroinitiator).

A-B diblock copolymers such as methyl methacrylate-styrene and B-A diblock copolymers such as styrene-methyl methacrylate can be obtained using a macro living radical polymerization initiator of the invention. A-B-A triblock copolymers such as methyl methacrylate-styrene-methyl methacrylate and A-B-C triblock copolymers such as methyl methacrylate-styrene-butyl acrylate are also available. This is attributable to the fact that the vinyl monomers of various different types are controllable by the organotellurium compound of the formula (1), the azo type polymerization initiator and the ditelluride compound of the formula (2) of the invention, and also to the fact that highly reactive tellurium is present at the growth terminal of the living radical polymer obtained with use of the living radical polymerization initiator.

Stated more specifically, block copolymers are prepared by the processes to be described below.

For preparing A-B diblock copolymers such as methyl methacrylate-styrene copolymer, methyl methacrylate, an organotellurium compound of the formula (1), an azo type polymerization initiator and a ditelluride compound of the formula (2) are mixed together first as in the process described above for preparing a living radical polymer to obtain poly(methyl methacrylate), and subsequently mixing styrene with the polymer to obtain methyl methacrylate-styrene copolymer.

A-B-A triblock copolymers and A-B-C triblock copolymers can be produced, for example, by preparing an A-B diblock copolymer by the above process and thereafter mixing a vinyl monomer (A) or vinyl monomer (C) with the copolymer to obtain the A-B-A or A-B-C triblock copolymer.

In producing the diblock copolymer according to the invention, the organotellurium compound of the formula (1), an azo type polymerization initiator and a ditelluride compound of the formula (2) can be used when a homopolymer is prepared from the first monomer and/or when the diblock copolymer is subsequently prepared.

Further in producing the triblock copolymer according to the invention the organotellurium compound of the formula (1), an azo type polymerization initiator and a ditelluride compound of the formula (2) can be used at least once when a homopolymer is prepared from the first monomer, or when a diblock copolymer is subsequently prepared, or when the triblock copolymer is subsequently prepared.

The preparation of each block may be followed directly by the subsequent reaction for the next block, or the subsequent reaction for the next block may be initiated after the purification of the product resulting from the completion of the first reaction. The block copolymer can be isolated by a usual method.

### BEST MODE OF CARRYING OUT THE INVENTION

The present invention will be described below in detail with reference to Examples, but is not limited thereto in any way. In Examples and Comparative Examples, properties were determined by the following methods.
(1) Identification of organotellurium compounds, ditelluride compound and living radical polymers The organotellurium compound and ditelluride compound were identified based on the results of ¹H-NMR and MS analyses. The molecular weight and molecular weight distribution of the living radical polymer were determined using GPC (gel permeation chromatography). The measuring instruments used are as follows.
¹H-NMR : Varian Gemini 2000 (300MHz for ¹H), JEOL JNM-A400 (400MHz for ¹H)
MS(HRMS) : JEOL JMS-300
Molecular weight and molecular weight distribution : liquid chromatography Shimadzu LC-10 [column : Shodex K-804L + K-805L, polystyrene standard : TOSOH TSK Standard, poly(methyl methacrylate) standard : Shodex Standard M-75] Preparation Example 1

### Preparation of (2-methyl-2-methyltellanyl-propionitrie)

A 6.38 g quantity (50 mmoles) of metallic tellurium [product of Aldrich, brand name: Tellurium (-40 mesh)] was suspended in 50 ml of THF, and 52.9 ml (1.04 M diethyl ether solution, 55 mmoles) of methyllithium (product of Kanto Chemical Co., Ltd., diethyl ether solution) was slowly added dropwise to the suspension at room temperature (for 10 minutes). The reaction mixture was stirred until the metallic tellurium disappeared completely (for 20 minutes). To the reaction mixture was added 10.4 g (70 mmoles) of 2-bromo-2-methyl-propionitrile at room temperature, followed by stirring for 2 hours. After the completion of reaction, the solvent was concentrated in a vacuum, followed by vacuum distillation to give 4.10 g of red oil (39% in yield).

IR, HRMS, ¹H-NMR and ¹³C - NMR analyses indicated that the product was 2-methyl-2-methyltellanyl-propionitrile. IR(neat, cm⁻¹) 2217, 1713, 1458, 1370, 1225, 1117, 835 HRMS(EI) m/z: Calcd for C₅H₉NTe(M)⁺, 212.9797; Found 212.9799 ¹H-NMR (300MHz, CDCl₃) 1.91(s, 6H), 2.38(s, 3H, TeCH₃) ¹³C-NMR (75MHz, CDCl₃) -15.5, 2.2, 30.3, 125.1 Preparation Example 2

### Preparation of ethyl-2-methyl-2-methyltellanyl-propionate

A 6.38 g quantity (50 mmoles) of metallic tellurium (same as above) was suspended in 50 ml of THF, and 52.9 ml (1.04 M diethyl ether solution, 55 mmoles) of methyllithium (same as above) was slowly added dropwise to the suspension at room temperature (for 10 minutes). The reaction mixture was stirred until the metallic tellurium disappeared completely (for 20 minutes). To the reaction mixture was added 10.7 g (55 mmoles) of ethyl-2-bromo-isobutyrate at room temperature, followed by stirring for 2 hours. After the completion of reaction, the solvent was concentrated in a vacuum, followed by vacuum distillation to give 6.53 g of yellow oil (51% in yield).

IR, HRMS, ¹H-NMR and ¹³C-NMR analyses indicated that the product was ethyl-2-methyl-2-methyltellanyl-propionate. IR(neat, cm⁻¹) 1700, 1466, 1385, 1296, 1146, 1111, 1028 HRMS(EI) m/z: Calcd for C₇H₁₄O₂Te(M)⁺, 260.0056; Found 260.0053 ¹H-NMR (300MHz, CDCl₃) 1.27 (t, J=6.9Hz, 3H), 1.74(s, 6H), 2.15(s, 3H, TeCH₃), 4.16(q, J=7.2Hz, 2H) ¹³C-NMR (75MHz, CDCl₃) -17.38, 13.89, 23.42, 27.93, 60.80, 176.75

### Preparation Example 3

### Preparation of ethyl-2-methyl-2-n-butyltellanyl-propionate

A 6.38 g quantity (50 mmoles) of metallic tellurium (same as above) was suspended in 50 ml of THF, and 34.4 ml(55 mmoles) of n-butyllithium (product of Aldrich, 1.6 M hexane solution) was slowly added dropwise to the suspension at room temperature (for 10 minutes). The reaction mixture was stirred until the metallic tellurium disappeared completely (for 20 minutes). To the reaction mixture was added 10.7 g (55 mmoles) of ethyl-2-bromo-isobutyrate at room temperature, followed by stirring for 2 hours. After the completion of reaction, the solvent was concentrated in a vacuum, followed by vacuum distillation to give 8.98 g of yellow oil (59.5% in yield).

¹H-NMR analysis indicated that the product was ethyl-2-methyl-2-n-butyltellanyl-propionate.

¹H-NMR (300MHz, CDCl₃) 0.93(t, J=7.5Hz, 3H), 1.25(t, J=7.2Hz, 3H), 1.37(m, 2H), 1.74(s, 6H), 1.76(m, 2H), 2.90(t, J=7.5Hz, 2H, CH₂Te), 4.14(q, J=7.2Hz, 2H)

### Preparation Example 4 (dimethyl ditelluride)

A 3.19 g quantity (25 mmoles) of metallic tellurium [product of Aldrich, brand name: Tellurium (-40 mesh)] was suspended in 25 ml of THF, and 25 ml (28.5 mmoles) of methyllithium [product of Kanto Chemical Co, Ltd., diethyl ether solution] was added slowly to the suspension at 0°C (10 minutes). The reaction mixture was stirred until the metallic tellurium disappeared completely (10 minutes). To the resulting reaction mixture was added 20 ml of a solution of ammonium chloride at room temperature, followed by stirring for 1 hour. The organic layer was separated off, and the aqueous layer was subjected to extraction with diethyl ether 3 times. The organic layers were collected, dried over anhydrous sodium sulfate and concentrated in a vacuum, affording 2.69 g (9.4 mmoles, yield 75%) of blackish purple oil.

The product was found to be dimethyl ditelluride by MS (HRMS) and ¹H-NMR.
HRMS(EI) m/z: Calcd for C₂H₆Te₂(M)⁺, 289.8594; Found 289.8593
¹H-NMR (300MHz, CDCl₃) 2.67(s, 6H)

### Preparation Example 5 (di-n-butyl ditelluride)

A 3.19 g quantity (25 mmoles) of metallic tellurium (same as above) was suspended in 25 ml of THF, and 17.2 ml (27.5 mmoles) of n-butyllithium [product of Aldrich, 1.6 M hexane solution] was added slowly to the suspension at 0°C (10 minutes). The reaction mixture was stirred until the metallic tellurium disappeared completely (10 minutes). To the resulting reaction mixture was added 20 ml of a solution of ammonium chloride at room temperature, followed by stirring for 1 hour. The organic layer was separated off, and the aqueous layer was subjected to extraction with diethyl ether 3 times. The organic layers were collected, dried over anhydrous sodium sulfate and concentrated in a vacuum, affording 4.41 g (11.93 mmoles, yield 95%) of blackish purple oil.

The product was found to be di-n-ditelluride by ¹H-NMR.

¹H-NMR(300MHz, CDCl₃) 0.93 (t, J=7.3Hz, 3H), 1.39(m, 2H), 1.71(m, 2H), 3.11(t, J=7.6, 2H, CH₂Te)

### Reference Example 1

2-Bromo-2-methyl-propionitrile which was used in Preparation Example 1 was prepared as follows.

Bromine was slowly added dropwise to a solution of isobutyronitrile (200 mmoles) and phosphorus tribromide (PBr₃, 20 mmoles) in ether (Et₂O, 100 ml) in a reaction vessel while cooling with an ice-bath. After completion of dropwise addition, the mixture was reacted at room temperature for 14 hours. The resulting solution was poured into ice-water for work up, extracted with ether (three times), dried with magnesium sulfate, filtered to remove magnesium sulfate. The filtrate was concentrated by removing solvent by an evaporator. The resulting concentrate was purified by distillation, giving 17.08 g of colorless transparent liquid (b.p. 57°C / 43 mmHg) in 58 % yield.

### Example 1

Along with 1.00 g (10 mmoles) of methyl methacrylate [stabilized with hydroquinone (HQ)], 21.1 mg (0.10 mmole) of the compound prepared in Preparation Example 1, 16.4 mg (0.10 mmole) of AIBN (Otsuka Chemical Co., Ltd., brand name:AIBN) and 28.5 mg (0.10 mmole) of the compound prepared in Preparation Example 4 were placed into a glove box with the inside air replaced by nitrogen, followed by stirring at 60 °C for 2 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.977 g of poly(methyl methacrylate).

Table 1 shows the result of GPC analysis [with reference to the molecular weight of an authentic sample of poly(methyl methacrylate)].

### Comparative Example 1

Along with AIBN (same as above) (0.10 mmole), the compound prepared in Preparation Example 4 (0.10 mmole) and methyl methacrylate (same as above)(10 mmoles) were placed into a glove box with the inside air replaced by nitrogen, followed by stirring at 80 °C for 4 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(methyl methacrylate).

Table 1 shows the result of GPC analysis [with reference to the molecular weight of an authentic sample of poly(methyl methacrylate)].

**Table 1**

| | reaction condition | yield (%) | Mn | PD |
|---|---|---|---|---|
| Ex.1 | 60 °C, 2 hr | 98 | 9600 | 1.15 |
| Com.Ex.1 | 80 °C, 4 hr | 98 | 16300 | 2.10 |

A comparison between Example 1 and Comparative Example 1 indicates that when the compound of the formula (1) was used, a living radical polymer of narrower molecular weight distribution (PD value closer to 1) is obtained.

### Example 2

Along with 1.04 g (10 mmoles) of styrene, 21.1 mg (0.10 mmole) of the compound prepared in Preparation Example 1, 16.4 mg (0.10 mmole) of AIBN (same as above) and 28.5 mg (0.10 mmole) of the compound prepared in Preparation Example 4 were placed into a glove box with the inside air replaced by nitrogen, followed by stirring at 60 °C for 11 hours. After the completion of the reaction, the reaction mixture was dissolved in 5 ml of chloroform, and the solution was then poured into 200 ml of methanol which was being stirred. The resulting polymer precipitate was collected by suction filtration and dried at room temperature to obtain polystyrene (yield 57%).

GPC analysis (with reference to the molecular weight of an authentic sample of polystyrene) revealed Mn 6200 and PD=1.17.

### Example 3

Along with 1.28 g (10 mmoles) of n-butyl acrylate (stabilized with hydroquinone), 21.1 mg (0.10 mmole) of the compound prepared in Preparation Example 1, 16.4 mg (0.10 mmole) of AIBN (same as above) and 28.5 mg (0.10 mmole) of the compound prepared in Preparation Example 4 were placed into a glove box with the inside air replaced by nitrogen, followed by stirring at 60 °C for 24 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(n-butyl acrylate) (yield 14%).

GPC analysis [with reference to the molecular weight of an authentic sample of poly(methyl methacrylate)] revealed Mn 1800 and PD=1.12.

### Example 4

Along with 1.30 g (10 mmoles) of 2-hydroxyethyl methacrylate [stabilized with hydroquinone mono methyl ether (MEHQ)](Wako Pure Chemical Industries, Ltd.), 21.1 mg (0.10 mmole) of the compound prepared in Preparation Example 1, 16.4 mg (0.10 mmole) of AIBN (same as above), 28.5 mg (0.10 mmole) of the compound prepared in Preparation Example 4 and 1 ml of DMF were placed into a glove box with the inside air replaced by nitrogen, followed by stirring at 60 °C for 2 hours. After the completion of the reaction, solvent and the remaining monomer were removed at 60 to 80 °C for 12 hours under the decompression (<0.1 mmHg). The resulting polymer precipitate was collected by suction filtration and dried to obtain 1.168 g of poly(2-hydroxyethyl methacrylate) (yield 90%).

GPC analysis [with reference to the molecular weight of an authentic sample of poly(methyl methacrylate)] revealed Mn 22300 and PD=1.18.

### Example 5

Along with 1.00 g (10 mmoles) of methyl methacrylate (same as above), 26.0 mg (0.10 mmole) of the compound prepared in Preparation Example 2, 8.2 mg (0.05 mmole) of AIBN (same as above) and 14.3 mg (0.05 mmole) of the compound prepared in Preparation Example 4 were placed into a glove box with the inside air replaced by nitrogen, followed by stirring at 60 °C for 2 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(methyl methacrylate) (yield 59.7%).

GPC analysis [with reference to the molecular weight of an authentic sample of poly(methyl methacrylate)] revealed Mn 12000 and PD-1.09.

### Example 6

Along with 1.00 g (10 mmoles) of methyl methacrylate (same as above), 26.0 mg (0.10 mmole) of the compound prepared in Preparation Example 2, 8.2 mg (0.05 mmole) of AIBN (same as above) and 18.5 mg (0.05 mmole) of the compound prepared in Preparation Example 5 were placed into a glove box with the inside air replaced by nitrogen, followed by stirring at 60 °C for 2 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(methyl methacrylate)(yield 41.3%).

GPC analysis [with reference to the molecular weight of an authentic sample of poly(methyl methacrylate)] revealed Mn 12000 and PD=1.10.

### Example 7

Along with 1.00 g (10 mmoles) of methyl methacrylate (same as above), 30.18 mg (0.10 mmole) of the compound prepared in Preparation Example 3, 8.2 mg (0.05 mmole) of AIBN (same as above) and 14.3 mg (0.05 mmole) of the compound prepared in Preparation Example 4 were placed into a glove box with the inside air replaced by nitrogen, followed by stirring at 60 **°C** for 2 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(methyl methacrylate) (yield 64.3%).

GPC analysis [with reference to the molecular weight of an authentic sample of poly(methyl methacrylate)] revealed Mn 14000 and PD-1.10.

### Example 8

Along with 1.00 g (10 mmoles) of methyl methacrylate (same as above), 30.18 mg (0.10 mmole) of the compound prepared in Preparation Example 3, 8.2 mg (0.05 mmole) of AIBN (same as above) and 18.5 mg (0.05 mmole) of the compound prepared in Preparation Example 5 were placed into a glove box with the inside air replaced by nitrogen, followed by stirring at 60 °C for 2 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(methyl methacrylate) (yield 61.8%).

GPC analysis [with reference to the molecular weight of an authentic sample of poly(methyl methacrylate)] revealed Mn 14800 and PD=1.17.

### Example 9

Along with 1.42 g (10 mmoles) of n-butyl methacrylate [stabilized with hydroquinone (HQ)] (Wako Pure Chemical Industries, Ltd.), 30.18 mg (0.10 mmole) of the compound prepared in Preparation Example 3, 11.52 mg (0.05 mmole) of MAIB (Otsuka Chemical Co., Ltd., brand name: MAIB) and 18.5 mg (0.05 mmole) of the compound prepared in Preparation Example 5 were placed into a glove box with the inside air replaced by nitrogen, followed by stirring at 60 °C for 2 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly (n-butyl methacrylate) (yield 87.0%).

GPC analysis (with reference to the molecular weight of an authentic sample of polystyrene) revealed Mn 16000 and PD=1.20.

### Example 10

Along with 1.42 g (10 mmoles) of n-butyl methacrylate (same as above), 30.18 mg (0.10 mmole) of the compound prepared in Preparation Example 3, 7.0 mg (0.05 mmole) of 2-cyano-2-propylazoformamide (Wako Pure Chemical Industries, Ltd., brand name: V-30) and 18.5 mg (0.05 mmole) of the compound prepared in Preparation Example 5 were placed into a glove box with the inside air replaced by nitrogen, followed by stirring at 100 °C for 1 hour. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(n-butyl methacrylate) (yield 86.0%).

GPC analysis [with reference to the molecular weight of an authentic sample of polystyrene] revealed Mn 17000 and PD=1.17.

### Example 11

Along with 1.68 g (10 mmoles) of cyclohexyl methacrylate [stabilized with hydroquinone (HQ)] (Wako Pure Chemical Industries, Ltd.), 30.18 mg (0.10 mmole) of the compound prepared in Preparation Example 3, 9.6 mg (0.05 mmole) of 2,2'-azobis-2-methylbutyronitrile (Otsuka Chemical Co., Ltd., brand name: AMBN) and 18.5 mg (0.05 mmole) of the compound prepared in Preparation Example 5 were placed into a glove box with the inside air replaced by nitrogen, followed by stirring at 60 °C for 2 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain poly(cyclohexyl methacrylate) (yield 92.0%).

GPC analysis (with reference to the molecular weight of an authentic sample of polystyrene) revealed Mn 13000 and PD=1.38.

### Example 12

Along with 1.301 g (10 mmoles) of 2-hydroxyethyl methacrylate [stabilized with hydroquinone mono methyl ether (MEHQ)] (Wako Pure Chemical Industries, Ltd.), 30.18 mg (0.10 mmole) of the compound prepared in Preparation Example 3, 14.0 mg (0.05 mmole) of 4,4'-azobis-4-cyanovaleric acid (Otsuka Chemical Co., Ltd., brand name: ACVA), 18.5 mg (0.05 mmole) of the compound prepared in Preparation Example 5 and 0.5 ml of DMF were placed into a glove box with the inside air replaced by nitrogen, followed by stirring at 60 °C for 5 hours. After the completion of the reaction, the reaction mixture was dissolved in 5 ml of methanol, and the solution was then poured into 200 ml of hexane which was being stirred. The resulting polymer precipitate was collected by suction filtration and dried at room temperature to obtain poly(2-hydroxyethyl methacrylate) (yield 96.0%).

GPC analysis [with reference to the molecular weight of an authentic sample of poly(methyl methacrylate)] revealed Mn 29000 and PD=1.38.

### Example 13

Along with 2.22 g (10 mmoles) of isobornyl methacrylate [stabilized with hydroquinone mono methyl ether (MEHQ)] (Mitsubishi Layon Industries, Ltd.), 30.18 mg (0.10 mmole) of the compound prepared in Preparation Example 3, 12.2 mg (0.05 mmole) of 1,1'-azobis-1-cyclohexane carbonitrile (Otsuka Chemical Co., Ltd., brand name: ACHN) and 18.5 mg (0.05 mmole) of the compound prepared in Preparation Example 5 were placed into a glove box with the inside air replaced by nitrogen, followed by stirring at 60 °C for 5 hours. After the completion of the reaction, the reaction mixture was dissolved in 5 ml of chroloform, and the solution was then poured into 200 ml of hexane which was being stirred. The resulting polymer precipitate was collected by suction filtration and dried at room temperature to obtain poly(isobornyl methacrylate) (yield 66.0%).

GPC analysis (with reference to the molecular weight of an authentic sample of polystyrene) revealed Mn 13000 and PD=1.34.

### Example 14

Along with 4.00 g (40 mmoles) of methyl methacrylate, 26.0 mg (0.10 mmole) of ethyl-2-methyl-2-methyltellanyl-propionate prepared in Preparation Example 2, 15.4 mg (0.05 mmole) of 2,2'-azobis(4-methoxy-2,4-dimethylvaleronitrile) (Wako Pure Chemical Industries, Ltd., brand name: V-70) and 28.5 mg (0.10 mmole) of dimethyl ditelluride prepared in Preparation Example 4 were placed into a glove box with the inside air replaced by nitrogen, followed by stirring at 60 °C for 3 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.845 g of poly(methyl methacrylate).

GPC analysis [with reference to the molecular weight of an authentic sample of poly(methyl methacrylate)] revealed Mn 10900 and PD=1.17.

### Example 15

Along with 2.00 g (20 mmoles) of methyl methacrylate, 26.0 mg (0.10 mmole) of ethyl-2-methyl-2-methyltellanyl-propionate prepared in Preparation Example 2, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at room temperature to obtain a uniform solution. A solution (1.00 g) was taken out therefrom and was placed into an another reaction vessel, followed by stirring at 60 °C for 3 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.887 g of poly(methyl methacrylate).

GPC analysis [with reference to the molecular weight of an authentic sample of poly(methyl methacrylate)] revealed Mn 20600 and PD=1.15.

### Example 16

Along with 5.01 g (50 mmoles) of methyl methacrylate, 26.0 mg (0.10 mmole) of ethyl-2-methyl-2-methyltellanyl-propionate prepared in Preparation Example 2, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at room temperature to obtain a uniform solution. A solution (1.00 g) was taken out therefrom and was placed into an another reaction vessel, followed by stirring at 60 °C for 3 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.639 g of poly(methyl methacrylate).

GPC analysis [with reference to the molecular weight of an authentic sample of poly(methyl methacrylate)] revealed Mn 32100 and PD=1.18.

### Example 17

Along with 10.01 g (100 mmoles) of methyl methacrylate, 26.0 mg (0.10 mmole) of ethyl-2-methyl-2-methyltellanyl-propionate prepared in Preparation Example 2, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at room temperature to obtain a uniform solution. A solution (1.00 g) was taken out therefrom and was placed into an another reaction vessel, followed by stirring at 60 °C for 3 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.740 g of poly(methyl methacrylate).

GPC analysis [with reference to the molecular weight of an authentic sample of poly(methyl methacrylate)] revealed Mn 71300 and PD=1.17.

### Example 18

Along with 20.02 g (200 mmoles) of methyl methacrylate, 26.0 mg (0.10 mmole) of ethyl-2-methyl-2-methyltellanyl-propionate prepared in Preparation Example 2, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at room temperature to obtain a uniform solution. A solution (1.00 g) was taken out therefrom and was added to a solution of 5.01 g (50 mmoles) of methyl methacrylate, followed by stirring at room temperature. A solution (1.00 g) was taken out therefrom and was placed into an another reaction vessel, followed by stirring at 60 °C for 3 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.852 g of poly(methyl methacrylate).

GPC analysis [with reference to the molecular weight of an authentic sample of poly(methyl methacrylate)] revealed Mn 148000 and PD=1.22.

### Example 19

Along with 1.38 g (10 mmoles) of p-chlorostyrene (TOKYO KASEI KOGYO CO., LTD.), 26.0 mg (0.10 mmole) of ethyl-2-methyl-2-methyltellanyl-propionate prepared in Preparation Example 2, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at 60 °C for 16 hours. After the completion of the reaction, the reaction mixture was dissolved in 5 ml of chloroform, and the solution was then poured into 200 ml of methanol which was being stirred. The resulting polymer precipitate was collected by suction filtration and dried at room temperature to obtain 1.284 g of poly(p-chlorostyrene).

GPC analysis [with reference to the molecular weight of an authentic sample of polystyrene] revealed Mn 10300 and PD=1.24.

### Example 20

Along with 1.38 g (10 mmoles) of p-chlorostyrene (TOKYO KASEI KOGYO CO., LTD.), 30.18 mg (0.10 mmole) of ethyl-2-methyl-2-butyltellanyl-propionate prepared in Preparation Example 3, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at 60 °C for 17 hours. After the completion of the reaction, the reaction mixture was dissolved in 5 ml of chloroform, and the solution was then poured into 200 ml of methanol which was being stirred. The resulting polymer precipitate was collected by suction filtration and dried at room temperature to obtain 1.260 g of poly(p-chlorostyrene).

GPC analysis [with reference to the molecular weight of an authentic sample of polystyrene] revealed Mn 12100 and PD=1.05.

### Example 21

Along with 0.67 g (10 mmoles) of methacrylonitrile (TOKYO KASEI KOGYO CO., LTD.), 30.18 mg (0.10 mmole) of ethyl-2-methyl-2-butyltellanyl-propionate prepared in Preparation Example 3, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at 60 °C for 20 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.359 g of poly(methacrylonitrile).

GPC analysis [with reference to the molecular weight of an authentic sample of poly(methyl methacrylate)] revealed Mn 2400 and PD=1.23.

### Example 22

Along with 0.70 g (10 mmoles) of methyl vinyl ketone (TOKYO KASEI KOGYO CO., LTD.), 30.18 mg (0.10 mmole) of ethyl-2-methyl-2-methyltellanyl-propionate prepared in Preparation Example 3, 16.4 mg (0.10 mmole) of AIBN (Otsuka Chemical Co., Ltd., brand name: AIBN) and 28.5 mg (0.10 mmole) of dimethyl ditelluride prepared in Preparation Example 4 were placed into a glove box with the inside air replaced by nitrogen, followed by stirring at 60 °C for 20 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain 0.369 g of poly(methyl vinyl ketone).

GPC analysis [with reference to the molecular weight of an authentic sample of poly(methyl methacrylate)] revealed Mn 1700 and PDI=1.44.

### Example 23

Along with 1.27 g (10 mmoles) of N-isopropylmethacrylamide (Aldrich.), 30.18 mg (0.10 mmole) of ethyl-2-methyl-2-methyltellanyl-propionate prepared in Preparation Example 3, 16.4 mg (0.10 mmole) of AIBN (Otsuka Chemical Co., Ltd., brand name: AIBN), 28.5 mg (0.10 mmole) of dimethyl ditelluride prepared in Preparation Example 4 and 2 ml of DMF were placed into a glove box with the inside air replaced by nitrogen, followed by stirring at 60 °C for 20 hours. After the completion of the reaction, DMF was removed under the decompression, and the reaction mixture was dissolved in 5 ml of chloroform, and the solution was then poured into 200 ml of hexane which was being stirred and heated at 55 °C. The resulting polymer precipitate was collected by suction filtration and dried at room temperature to obtain 0.369 g of poly(N-isopropylmethacrylamide).

GPC analysis [with reference to the molecular weight of an authentic sample of poly(methyl methacrylate)] revealed Mn 14200 and PD=1.11.

### Example 24

Along with 30.18 mg (0.10 mmole) of the compound prepared in Preparation Example 3, 18.5 mg (0.05 mmole) of the compound prepared in Preparation Example 5, 11.52 mg (0.05 mmole) of MAIB (same as above), 1.00 g (10 mmoles) of methyl methacrylate (same as above) and 0.52 g (5 mmoles) of styrene were placed into a glove box with the inside air replaced by nitrogen, followed by stirring at 60 °C for 8 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain a random copolymer of methyl methacrylate and styrene (yield: 90.0%).

GPC analysis [with reference to the molecular weight of an authentic sample of polystyrene] revealed Mn 16000 and PD=1.25.

### Example 25

Along with 30.18 mg (0.10 mmole) of the compound prepared in Preparation Example 3, 18.5 mg (0.05 mmole) of the compound prepared in Preparation Example 5, 11.52 mg (0.05 mmole) of MAIB (same as above), 1.001 g (10 mmoles) of methyl methacrylate (same as above) and 1.04 g (10 mmoles) of styrene were placed into a glove box with the inside air replaced by nitrogen, followed by stirring at 60 °C for 8 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain a random copolymer of methyl methacrylate and styrene (yield: 85.0%).

GPC analysis [with reference to the molecular weight of an authentic sample of polystyrene] revealed Mn 20000 and PD=1.20.

### Example 26

Along with 30.18 mg (0.10 mmole) of the compound prepared in Preparation Example 3, 18.5 mg (0.05 mmole) of the compound prepared in Preparation Example 5, 11.52 mg (0.05 mmole) of MAIB (same as above), 0.50 g (5 mmoles) of methyl methacrylate (same as above) and 1.04 g (10 mmoles) of styrene were placed into a glove box with the inside air replaced by nitrogen, followed by stirring at 60 °C for 8 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain a random copolymer of methyl methacrylate and styrene (yield: 90.0%).

GPC analysis [with reference to the molecular weight of an authentic sample of polystyrene] revealed Mn 14000 and PD=1.27.

### Example 27

Along with 30.18 mg (0.10 mmole) of the compound prepared in Preparation Example 3, 18.5 mg (0.05 mmole) of the compound prepared in Preparation Example 5, 11.52 mg (0.05 mmole) of MAIB (same as above), 0.50 g (5 mmoles) of methyl methacrylate (same as above) and 0.65 g (5 mmoles) of 2-hydroxyethyl methacrylate were placed into a glove box with the inside air replaced by nitrogen, followed by stirring at 60 °C for 4 hours. After the completion of the reaction, the reaction mixture was dissolved in 5 ml of DMF, and the solution was then poured into 200 ml of hexane which was being stirred. The resulting polymer precipitate was collected by suction filtration and dried at room temperature to obtain a random copolymer of methyl methacrylate and 2-hydroxyethyl methacrylate (yield: 92.0%).

GPC analysis [with reference to the molecular weight of an authentic sample of polystyrene] revealed Mn 15000 and PD=1.36.

### Example 28

Along with 30.18 mg (0.10 mmole) of the compound prepared in Preparation Example 3, 18.5 mg (0.05 mmole) of the compound prepared in Preparation Example 5, 11.52 mg (0.05 mmole) of MAIB (same as above), 0.50 g (5 mmoles) of methyl methacrylate (same as above) and 0.34 g (5 mmoles) of methacrylonitrile were placed into a glove box with the inside air replaced by nitrogen, followed by stirring at 60 °C for 8 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain a random copolymer of methyl methacrylate and methacrylonitrile (yield: 65.0%).

GPC analysis [with reference to the molecular weight of an authentic sample of polystyrene] revealed Mn 15000 and PD=1.33.

### Example 29

Along with 30.18 mg (0.10 mmole) of the compound prepared in Preparation Example 3, 18.5 mg (0.05 mmole) of the compound prepared in Preparation Example 5, 11.52 mg (0.05 mmole) of MAIB (same as above), 0.50 g (5 mmoles) of methyl methacrylate (same as above) and 0.35 g (5 mmoles) of methyl vinyl ketone were placed into a glove box with the inside air replaced by nitrogen, followed by stirring at 60 °C for 8 hours. After the completion of the reaction, the reaction mixture was dissolved in 5 ml of chloroform, and the solution was then poured into 200 ml of hexane which was being stirred. The resulting polymer precipitate was collected by suction filtration and dried at room temperature to obtain a random copolymer of methyl methacrylate and methyl vinyl ketone (yield: 78.0%).

GPC analysis [with reference to the molecular weight of an authentic sample of polystyrene] revealed Mn 7400 and PD=1.11.

### Example 30

### Preparation of copolymer of poly(N-isopropylacrylamide)-(N-isopropylmethacrylamide) (50 equiv + 50 equiv)

Along with 0.566 g (5 mmoles) of N-isopropylacrylamide (Aldrich.), 0.636 g (5 mmoles) of N-isopropylmethacrylamide (Aldrich.), 30.0 mg (0.10 mmole) of ethyl-2-methyl-2-methyltellanyl-propionate prepared in Preparation Example 3, 16.4 mg (0.10 mmole) of AIBN (Otsuka Chemical Co., Ltd., brand name: AIBN), 28.5 mg (0.10 mmole) of dimethyl ditelluride prepared in Preparation Example 4 and 2 ml of DMF were placed into a glove box with the inside air replaced by nitrogen, followed by stirring at 60 °C for 18 hours. The reaction solution was sampled and was checked for a ratio of the remaining monomers by ¹H-NMR spectrum. The ratio was about 65 : 55 in N-isopropylacrylamide : N-isopropylmethacrylamide and the former monomer remained in a little more than the latter monomer. However, it was revealed that the polymerization proceeded substantially in the same original material ratio. After the completion of the reaction, DMF was removed under the decompression, and the reaction mixture was dissolved in 5 ml of chloroform, and the solution was then poured into 200 ml of hexane which was being stirred and heated at 55 °C. The resulting polymer precipitate was collected by suction filtration and dried at room temperature to obtain 0.373 g of a copolymer of poly(N-isopropylacrylamide)-(N-isopropylmethacrylamide).

GPC analysis [with reference to the molecular weight of an authentic sample of poly(methyl methacrylate)] revealed Mn 4300 and PD=1.13.

### Test Example 1

### Elemental analysis of C. H. N

The random copolymers prepared in Examples 24 to 29 were subjected to elemental analysis using an elemental analyzer (J-SCIENCE LAB Co., LTd., organic elemental analyzer, MICRO CORDER JM10). Table 2 shows the results.

**Table 2**

| Ex. | material monomer ratio (mole%) | monomer ratio in resulting polymer(mole%) |
|---|---|---|
| 24 | MMA:St = 66.7 : 33.3 | MMA:St = 64.8 : 35.2 |
| 25 | MMA:St = 50.0 : 50.0 | MMA:St = 47.8 : 52.2 |
| 26 | MMA:St = 33.3 : 66.7 | MMA:St = 32.2 : 67.8 |
| 27 | MMA:HEMA = 50.0 : 50.0 | MMA:HEMA = 52.4 : 47.6 |
| 28 | MMA:MAN - 50.0 : 50.0 | MMA:MAN = 51.5 : 48.5 |
| 29 | MMA:MVK - 50.0 : 50.0 | MMA:MVK = 58.0 : 42.0 |

Table 2 reveals that the process of the invention for preparing living radical polymers provides random copolymers each having substantially the same original material ratio (mole ratio).

### INDUSTRIAL APPLICABILITY

The invention provides a process for preparing living radical polymers which realizes precision control of molecular weights and molecular weight distributions under mild conditions.

Particularly, in the present invention, it is possible to prepare living radical polymers having more precise molecular weight and molecular weight distributions (PD=Mw/Mn) under mild conditions, even when not only styrene but a vinyl monomer other than styrene such as a (meth)acrylate ester, etc. is used.

The living radical polymers obtained by the polymerization process of the invention readily permit conversion of terminal groups to other functional groups, are useful for preparing macromonomers and useful as crosslinking sites and are usable as compatibilizing agents and as materials for block polymers.

## Claims

1. A process for producing a living radical polymer **characterized in that** a vinyl monomer is polymerized with use of an organotellurium compound represented by the formula (1), an azo type polymerization initiator and a ditelluride compound represented by the formula (2) 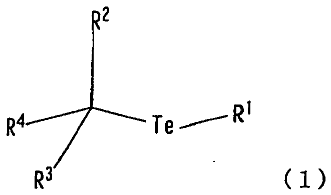 wherein R¹ is C₁-C₈ alkyl, aryl, substituted aryl or an aromatic heterocyclic group, R² and R³ are each a hydrogen atom or C₁-C₈ alkyl, and R⁴ is aryl, substituted aryl, an aromatic heterocyclic group, acyl, oxycarbonyl or cyano.
(R¹Te)₂ (2)
wherein R¹ is the same as above.

2. A mixture of an organotellurium compound represented by the formula (1), an azo type polymerization initiator and a ditelluride compound represented by the formula (2).

## Patentansprüche

1. Verfahren zur Herstellung eines lebenden radikalischen Polymers, **dadurch gekennzeichnet, dass** ein Vinylmonomer unter Verwendung einer tellurorganischen Verbindung der Formel (1), 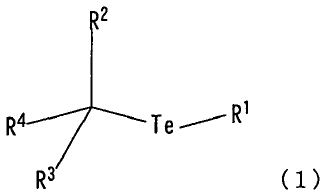 worin R¹ C₁-C₈-Alkyl, Aryl, substituiertes Aryl oder eine aromatische heterocyclische Gruppe ist, R² und R³ jeweils ein Wasserstoffatom oder C₁-C₈-Alkyl sind, und R⁴ Aryl, substituiertes Aryl, eine aromatische heterocyclische Gruppe, Acyl, Oxycarbonyl oder Cyan ist, eines Azo-Polymerisationsinitiators und einer Ditelluridverbindung der Formel (2),
(R¹Te)₂ (2)
worin R¹ wie oben definiert ist, polymerisiert wird.

2. Mischung aus einer tellurorganischen Verbindung der Formel (1), eines Azo-Polymerisationsinitiators und einer Ditelluridverbindung der Formel (2).

## Revendications

1. Procédé de production d'un polymère radicalaire vivant **caractérisé en ce qu'**un monomère vinylique est polymérisé avec l'utilisation d'un composé d'organotellure représenté par la formule (1), d'un initiateur de polymérisation de type azo et d'un composé de ditelluride représenté par la formule (2) 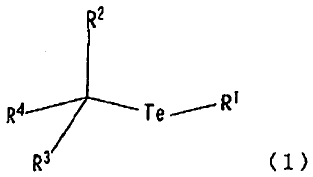 dans laquelle R¹ est un groupe alkyle en C₁-C₈, un groupe aryle, un groupe aryle substitué ou un groupe hétérocyclique aromatique, R² et R³ sont chacun un atome d'hydrogène ou un groupe alkyle en C₁-C₈, et R⁴ est un groupe aryle, un groupe aryle substitué, un groupe hétérocyclique aromatique, un groupe acyle, un groupe oxycarbonyle ou un groupe cyano ;
(R¹Te)₂ (2)
dans laquelle R¹ tel que décrit ci-dessus.

2. Mélange d'un composé d'organotellure représenté par la formule (1), d'un initiateur de polymérisation de type azo et d'un composé de ditelluride représenté par la formule (2).
